# EUROPEAN PATENT APPLICATION

(11) **EP 4 596 335 A1**
(43) Date of publication of application: **06.08.2025**
(21) Application number: 24200793.8
(22) Date of filing: 17.09.2024
(51) Int. Cl.: B60R 25/24, B60R 25/40, G07C 9/00

(54) **METHOD FOR PROCESSING VEHICLE KEY, VEHICLE, VEHICLE KEY AND STORAGE MEDIUM**

(30) Priority: 04.02.2024 CN 202410160684
(71) Applicant: Xiaomi EV Technology Co., Ltd., 100176 Beijing (CN)
(72) Inventor: LIN, Yizhen, Beijing, 100176 (CN)
(74) Representative: Stöckeler, Ferdinand

(57) **Abstract**

A method for processing a vehicle key includes: obtaining (S21) gear information of the vehicle; and sending (S22) a first instruction to the vehicle key according to the gear information. The first instruction is configured to control the vehicle key to be adjusted from a current first mode to a second mode, and a power consumption of the vehicle key in the second mode is lower than a power consumption of the vehicle key in the first mode.

## Description

### FIELD

The present invention relates to the field of vehicles, and more particularly to a method for processing a vehicle key, a vehicle, a vehicle key and a storage medium.

### BACKGROUND

A vehicle key is an accessory of a vehicle. In some scenes, the vehicle key is powered by a built-in battery, which often faces a problem of an insufficient power.

### SUMMARY

In order to overcome the problems in the related art, the present invention provides a method and a device for processing a vehicle key, a vehicle, a vehicle key and a storage medium.

According to embodiments of a first aspect of the present invention, a method for processing a vehicle key is provided. The method includes: obtaining gear information of the vehicle; and sending a first instruction to the vehicle key according to the gear information. The first instruction is configured to control the vehicle key to be adjusted from a current first mode to a second mode, and a power consumption of the vehicle key in the second mode is lower than a power consumption of the vehicle key in the first mode.

Optionally, sending the first instruction to the vehicle key according to the gear information includes: obtaining a current gear of the vehicle as a first gear; and sending the first instruction to the vehicle key in case that the first gear is different from a parking gear.

Optionally, the method further includes: sending a second instruction to the vehicle key in response to that the gear of the vehicle changes from the first gear to the parking gear, wherein the second instruction is configured to control the vehicle key to be adjusted from the second mode to the first mode. A connection interval between the vehicle key and the vehicle in the first mode is smaller than a connection interval between the vehicle key and the vehicle in the second mode.

Optionally, sending the first instruction to the vehicle key according to the gear information includes: obtaining position information of the vehicle key in case that a current gear of the vehicle is a parking gear; determining whether the vehicle key is located in the vehicle according to the position information; and sending the first instruction to the vehicle key in case that the vehicle key is located in the vehicle.

Optionally, sending the first instruction to the vehicle key in case that the vehicle key is located in the vehicle includes: in case that the vehicle key is located in the vehicle, obtaining a first duration by accumulating a time for which the vehicle key is located in the vehicle; and in case that the first duration is larger than a first duration threshold, sending the first instruction to the vehicle key.

Optionally, the method includes: sending a second instruction to the vehicle key in response to that a position of the vehicle key is changed from inside the vehicle to outside the vehicle, wherein the second instruction is configured to control the vehicle key to be adjusted from the second mode to the first mode. A connection interval between the vehicle key and the vehicle in the first mode is smaller than a connection interval between the vehicle key and the vehicle in the second mode.

Optionally, the method includes: obtaining gravity sensor data of the vehicle key; obtaining a second duration by accumulating a time for which the vehicle key is in a static state, in case that the vehicle key is determined to be in the static state according to the gravity sensor data; and breaking the connection between the vehicle and the vehicle key in case that the second duration is larger than a second duration threshold.

According to embodiments of a second aspect of the present invention, a method for processing a vehicle key is provided. The method includes: receiving a first instruction sent by a vehicle, wherein the vehicle sends the first instruction to the vehicle key according to gear information of the vehicle; and in response to the first instruction, adjusting the vehicle key from a current first mode to a second mode. A power consumption of the vehicle key in the second mode is lower than a power consumption of the vehicle key in the first mode.

Optionally, the method includes: obtaining state information of the vehicle key; and according to the state information, controlling the vehicle key to perform a power saving operation.

Optionally, the state information comprises a pairing state of the vehicle key and the vehicle, and controlling the vehicle key to perform the power saving operation according to the state information includes: turning off a broadcast signal of the vehicle key in case that the vehicle key is in an unpaired state.

Optionally, the state information comprises gravity sensor data of the vehicle key, and controlling the vehicle key to perform the power saving operation according to the state information includes: in case that the vehicle key is in a paired state and the vehicle key is determined to be in a static state according to the gravity sensor data, obtaining a target duration by accumulating a time for which the vehicle key in the static state; and in case that the target duration is larger than a target duration threshold, controlling the vehicle key to enter a dormant state.

Optionally, the state information includes power information of the vehicle key, and controlling the vehicle key to perform the power saving operation according to the state information includes: in case that the power information indicates that a remaining power value of the vehicle key is lower than a power threshold, increasing an interval for the vehicle key to send a broadcast signal.

Optionally, the method includes: receiving a second instruction sent by a vehicle, wherein the second instruction is sent by the vehicle after the vehicle determines that a gear of the vehicle is changed from a current first gear to a parking gear; or, the second instruction is sent by the vehicle after the vehicle determines that a position of the vehicle key is changed from inside the vehicle to outside the vehicle; and adjusting the vehicle key from the second mode to the first mode in response to the second instruction. A connection interval between the vehicle key and the vehicle in the first mode is smaller than a connection interval between the vehicle key and the vehicle in the second mode.

According to embodiments of a third aspect of the present invention, a device for processing a vehicle key is provided. The method includes: a first module configured to obtain gear information of the vehicle; and a second module configured to send a first instruction to the vehicle key according to the gear information. The first instruction is configured to control the vehicle key to be adjusted from a current first mode to a second mode, and a power consumption of the vehicle key in the second mode is lower than a power consumption of the vehicle key in the first mode.

According to embodiments of a fourth aspect of the present invention, a device for processing a vehicle key is provided. The method includes: a third module configured to receive a first instruction sent by a vehicle, wherein the vehicle sends the first instruction to the vehicle key according to gear information of the vehicle; and a fourth module configured to adjust the vehicle key from a current first mode to a second mode in response to the first instruction. A power consumption of the vehicle key in the second mode is lower than a power consumption of the vehicle key in the first mode.

According to embodiments of a fifth aspect of the present invention, a vehicle is provided, and includes: a processor; and a memory for storing instructions executable by the processor. The processor is configured to execute the instructions to perform the method according to the first aspect.

According to embodiments of a sixth aspect of the present invention, a vehicle key is provided, and includes: a processor; and a memory for storing instructions executable by the processor. The processor is configured to execute the instructions to perform the method according to the second aspect.

According to embodiments of a seventh aspect of the present invention, a computer-readable storage medium is provided, on which computer program instructions are stored, which are configured to, when executed by a processor, realize the steps of the method according to the first aspect.

According to embodiments of an eighth aspect of the present invention, a computer-readable storage medium is provided, on which computer program instructions are stored, which are configured to, when executed by a processor, realize the steps of the method according to the second aspect.

In the above solution, the vehicle can determine its own gear information and send the first instruction to the vehicle key according to the gear information. The first instruction is configured to control the vehicle key to be adjusted from the current first mode to the second mode, and the power consumption of the vehicle key in the second mode is lower than the power consumption of the vehicle key in the first mode. In this way, the vehicle can actively control the vehicle key according to its own gear information to reduce the power consumption of the vehicle key. Thus, it can save the power consumption of the vehicle key and increase the battery life of the vehicle key.

It is to be understood that both the foregoing general description and the following detailed description are illustrative and explanatory only and are not restrictive of the present invention.

### BRIEF DESCRIPTION OF THE DRAWINGS

The accompanying drawings, which are incorporated in and constitute a part of the specification, illustrate embodiments consistent with the present invention and together with the description, serve to explain the principles of the present invention.
Fig. 1 is an application scene diagram of a vehicle key according to an illustrative embodiment.
Fig. 2 is a flow chart of a method for processing a vehicle key according to an illustrative embodiment.
Fig. 3 is an implementation flow chart of step S22 according to an illustrative embodiment.
Fig. 4 is a flow chart of a method for processing a vehicle key according to an illustrative embodiment.
Fig. 5 is a flow chart of a method for processing a vehicle key according to an illustrative embodiment.
Fig. 6 is a block diagram of a device for processing a vehicle key according to an illustrative embodiment.
Fig. 7 is a block diagram of a device for processing a vehicle key according to an illustrative embodiment.
Fig. 8 is a block diagram of a vehicle 600 according to an illustrative embodiment.

### DETAILED DESCRIPTION

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all implementations consistent with the present invention. Rather, they are merely examples of devices and methods consistent with some aspects of the present invention as detailed in the appended claims.

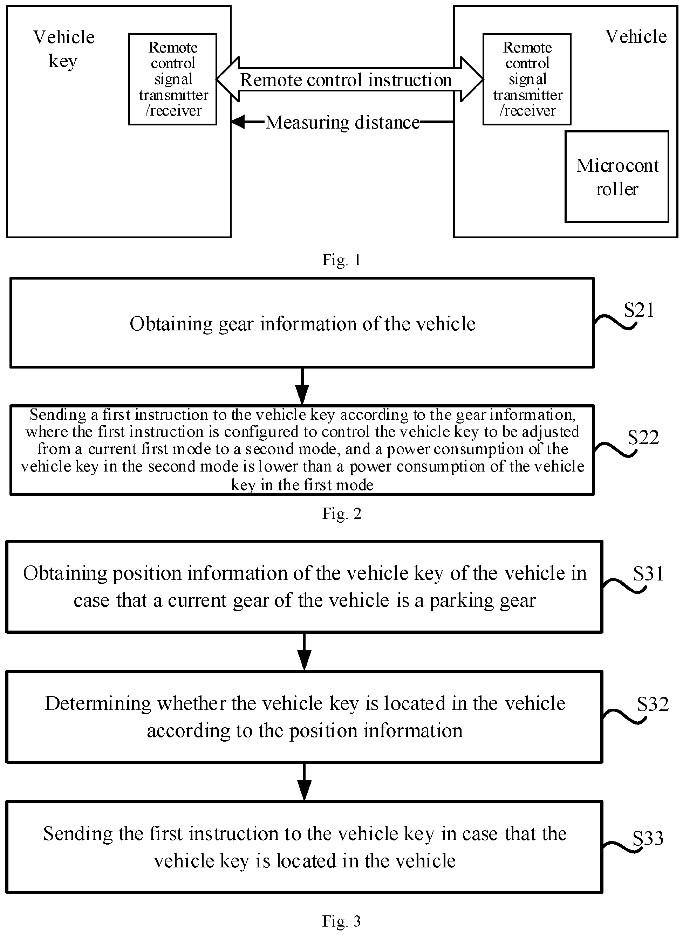

Before introducing a method and a device for processing a vehicle key, a vehicle, a vehicle key and a storage medium of the present invention, related scenes of embodiments of the present invention are first introduced. The vehicle key is an accessory of the vehicle. Referring to an application scene diagram of the vehicle key shown in Fig. 1, the vehicle key may include, for example, a remote control signal transmitter/receiver. In some scenes, the vehicle key can make a broadcast in a disconnected state, and the vehicle can establish a connection with the vehicle key after scanning the broadcast.

Based on the established connection, the remote control signal transmitter/receiver in the vehicle key can communicate with a remote control signal transmitter/receiver built in the vehicle. Based on the communication process, a microcontroller in the vehicle can realize related functions, such as measuring a distance between the vehicle key and the vehicle. In addition, remote control instructions can be sent between the vehicle key and the vehicle based on the connection.

It should be understood that the process of broadcasting of the vehicle key and the process of communication between the vehicle key and the vehicle based on the connection both consume power. However, in some scenes, the vehicle key is powered by a built-in battery, which often faces the problems of an insufficient power and a short battery life.

Therefore, the embodiments of the present invention provide a method for processing a vehicle key, which is applied to a vehicle. Fig. 2 is a flow chart of a method for processing a vehicle key according to an illustrative embodiment of the present invention. Referring to Fig. 2, the method includes the following steps.

In step S21, gear information of the vehicle is obtained.

In step S22, according to the gear information, a first instruction is sent to the vehicle key, and is configured to control the vehicle key to be adjusted from a current first mode to a second mode, and a power consumption of the vehicle key in the second mode is lower than a power consumption of the vehicle key in the first mode.

For example, in a possible embodiment, whether to send the first instruction to the vehicle key can be determined according to whether the gear of the vehicle is a parking gear.

For example, in some embodiments, the current gear of the vehicle can be obtained as a first gear. When the first gear is different from the parking gear, the first instruction is sent to the vehicle key.

It is noted that when the current first gear of the vehicle is different from the parking gear, it can be determined that the vehicle has completed the vehicle key authentication. For example, the vehicle may be in a stage of preparation for starting. At this time, the first instruction can be sent to the vehicle key to reduce the power consumption of the vehicle key.

As an example, the first instruction can be configured to control the vehicle key to increase a connection interval with the vehicle. It should be noted that in order to keep the connection between the vehicle key and the vehicle, the connection interval between the vehicle key and the vehicle can be set. In this way, the vehicle key can, for example, send an empty package to the vehicle based on the connection interval to prove that the vehicle key is in a valid state. In this way, the connection between the vehicle key and the vehicle can be maintained.

Furthermore, in some embodiments, the method further includes: sending a second instruction to the vehicle key in response to that the gear of the vehicle changes from the first gear to the parking gear. The second instruction is configured to control the vehicle key to be adjusted from the second mode to the first mode. In the first mode, the connection interval between the vehicle key and the vehicle is smaller than the connection interval between the vehicle key and the vehicle in the second mode.

When the gear of the vehicle is changed from the first gear to the parking gear, a user may need to use the vehicle key to lock the vehicle or make other operations. Since the connection interval between the vehicle key and the vehicle in the first mode is smaller than the connection interval between the vehicle key and the vehicle in the second mode, it may take larger to get a response result of a vehicle control operation when the vehicle key is used for the vehicle control operation in the second mode.

Therefore, in the above solution, the second instruction can be sent to the vehicle key in response to that the gear of the vehicle changes from the first gear to the parking gear, so as to control the vehicle key to be adjusted from the second mode to the first mode. In this way, the response time can be shortened when the user uses the vehicle key to make the vehicle control operation.

That is, the first instruction can be sent to the vehicle key in case that the current first gear of the vehicle is different from the parking gear, so as to reduce the power consumption of the vehicle key. In addition, when the gear of the vehicle is changed from the first gear to the parking gear, the second instruction can be sent to the vehicle key, thus improving the response speed of the vehicle control operation. In this way, on the basis of ensuring the response speed of the vehicle control operation, the above solution also realizes the effect of saving electricity for the vehicle key.

In a possible embodiment, the gear of the vehicle is the parking gear. Referring to an implementation flow of step S22 shown in Fig. 3, according to the gear information, sending the first instruction to the vehicle key includes the following steps.

In step S31, in case that the current gear of the vehicle is the parking gear, position information of the vehicle key is obtained.

In step S32, it is determined whether the vehicle key is located in the vehicle according to the position information.

As an example, the vehicle key can be located by Bluetooth, so as to obtain the position information of the vehicle key. In some possible embodiments, ultra-wideband can also be combined to determine the position information of the vehicle key. Ultra-wideband, also known as UWB, is called ultra wide band. Based on the position information of the vehicle key, it can be determined whether the vehicle key is in the vehicle.

In step S33, in case that the vehicle key is located in the vehicle, the first instruction is sent to the vehicle key.

In some implementation scenes, it can be determined that the user may be resting in the vehicle when the current gear of the vehicle is the parking gear and the vehicle key is located in the vehicle. Therefore, the first instruction can be sent to the vehicle key, thus reducing the power consumption of the vehicle key.

In some embodiments, in order to increase the accuracy of the vehicle key control, the first instruction can also be sent to the vehicle key based on a time for which the vehicle key is located in the vehicle, in case that the vehicle key is located in the vehicle.

As an example, in case that the vehicle key is located in the vehicle, sending the first instruction to the vehicle key includes the following steps.

In case that the vehicle key is located in the vehicle, the time for which the vehicle key is located in the vehicle is accumulated to obtain a first duration.

In case that the first duration is larger than a first duration threshold, the first instruction is sent to the vehicle key.

For example, in case that the vehicle key is located in the vehicle, the time for which the vehicle key is located in the vehicle is accumulated to obtain the first duration. In case that the first duration is larger than 2 minutes, the first instruction is sent to the vehicle key. Of course, the first duration threshold can be set based on requirements, which is not limited by the embodiments of the present invention.

In this way, by obtaining the first duration and sending the first instruction to the vehicle key in combination with the first duration, it is helpful to improve the accuracy of power saving control of the vehicle key.

Furthermore, in some embodiments, the method includes: sending the second instruction to the vehicle key in response to that a position of the vehicle key is changed from inside the vehicle to outside the vehicle. The second instruction is configured to control the vehicle key to be adjusted from the second mode to the first mode. In the first mode, the connection interval between the vehicle key and the vehicle is smaller than the connection interval between the vehicle key and the vehicle in the second mode.

When the position of the vehicle key is changed from inside the vehicle to outside the vehicle, the user may leave the inside of the vehicle. At this time, the user may have the need to use the vehicle key, such as the need to lock the vehicle based on the vehicle key. Since the connection interval between the vehicle key and the vehicle in the first mode is smaller than the connection interval between the vehicle key and the vehicle in the second mode, it may take larger to get the response result of the vehicle control operation when the vehicle key is used for the vehicle control operation in the second mode.

Therefore, in the above solution, the second instruction can be sent to the vehicle key in response to that the position of the vehicle key changes from inside the vehicle to outside the vehicle, thus controlling the vehicle key to be adjusted from the second mode to the first mode.

That is, the first instruction can be sent to the vehicle key in case that the vehicle key is located in the vehicle, so as to reduce the power consumption of the vehicle key. In addition, when the position of the vehicle key is changed from inside the vehicle to outside the vehicle, the second instruction can be sent to the vehicle key, thus improving the response speed of the vehicle control operation. In this way, on the basis of ensuring the response speed of the vehicle control operation, the above solution also realizes the effect of saving electricity for the vehicle key.

In the above solution, the vehicle can determine its own gear information and send the first instruction to the vehicle key according to the gear information. The first instruction is configured to control the vehicle key to be adjusted from the current first mode to the second mode, and the power consumption of the vehicle key in the second mode is lower than the power consumption of the vehicle key in the first mode. In this way, the vehicle can actively control the vehicle key according to its own gear information to reduce the power consumption of the vehicle key. Thus, it can save the power consumption of the vehicle key and increase the battery life of the vehicle key. For example, according to the test, the above solution can reduce the power consumption when the vehicle key is connected with the vehicle to operate from 368uA to 64uA.

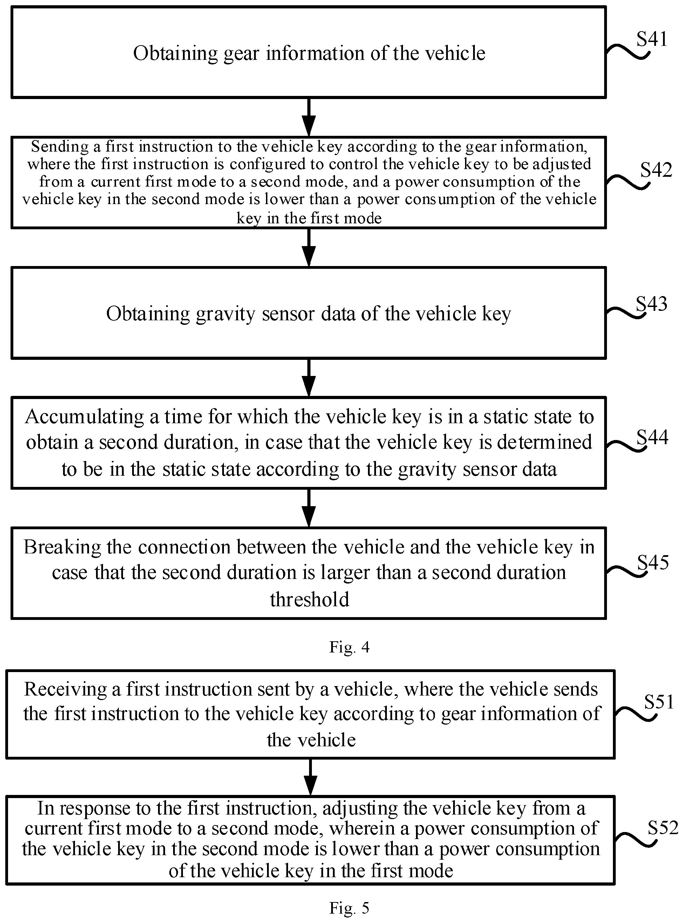

Fig. 4 is a flow chart of a method for processing a vehicle key according to an illustrative embodiment of the present invention. Referring to Fig. 4, the method is applied to the vehicle, and the method includes the following steps.

In step S41, gear information of the vehicle is obtained.

In step S42, according to the gear information, a first instruction is sent to the vehicle key, and is configured to control the vehicle key to be adjusted from a current first mode to a second mode, and a power consumption of the vehicle key in the second mode is lower than a power consumption of the vehicle key in the first mode.

In step S43, gravity sensor data of the vehicle key is obtained.

For example, a gravity sensor may be arranged in the vehicle key. The vehicle can send a data obtaining request to the vehicle key, so as to obtain the gravity sensor data in the vehicle key. In some embodiments, the vehicle key may also be configured to actively send the gravity sensor data to the vehicle.

In step S44, in case that it is determined that the vehicle key is in a static state according to the gravity sensor data, the time for which the vehicle key in the static state is accumulated to obtain a second duration.

In step S45, in case that the second duration is larger than a second duration threshold, the connection between the vehicle and the vehicle key is broken.

The second duration threshold can be set based on requirements. For example, the second duration threshold may be 10 minutes, that is, the vehicle may break the connection between the vehicle and the vehicle key in case that the second duration is more than 10 minutes. In this way, the vehicle can actively disconnect from the vehicle key after it is determined that the vehicle key is stationary for 10 minutes according to the gravity sensor data, thus achieving the effect of saving the power of the vehicle key.

In addition, it is noted that the inventors of the present invention found that in some scenes, it may occur that the vehicle cannot be locked because the vehicle key is kept connected with the vehicle. By adopting the above solution, the vehicle can actively disconnect from the vehicle key after determining that the time for which the vehicle key is stationary exceeds the second duration threshold. In this way, it can also solve the problem that the vehicle cannot be locked in related scenes.

Based on the same inventive concept, the embodiments of the present invention provide a method for processing a vehicle key, and the vehicle key can be the vehicle key mentioned in various embodiments of the present invention. Fig. 5 is a flow chart of a method for processing a vehicle key according to an illustrative embodiment of the present invention. Referring to Fig. 5, the method for processing the vehicle key includes the following steps.

In step S51, a first instruction sent by a vehicle is received, and the vehicle sends the first instruction to the vehicle key according to gear information of the vehicle.

Regarding the way in which the vehicle sends the first instruction to the vehicle key according to the gear information of the vehicle, reference can be made to the description in the above embodiment, which is not repeated in the present invention, for the sake of brevity.

In step S52, the vehicle key is adjusted from a current first mode to a second mode in response to the first instruction, and a power consumption of the vehicle key in the second mode is lower than a power consumption of the vehicle key in the first mode.

As an example, the first instruction can be configured to control the vehicle key to increase the connection interval with the vehicle. Step S52 may refer to adjusting the vehicle key from the current first mode to the second mode in response to the first instruction, and the connection interval in the second mode is larger than the connection interval in the first mode.

In the above solution, the vehicle can determine its own gear information and send the first instruction to the vehicle key according to the gear information. The first instruction is configured to control the vehicle key to be adjusted from the current first mode to the second mode, and the power consumption of the vehicle key in the second mode is lower than the power consumption of the vehicle key in the first mode. In this way, the vehicle can actively control the vehicle key according to its own gear information to reduce the power consumption of the vehicle key. Thus, it can save the power consumption of the vehicle key and increase the battery life of the vehicle key.

In a possible embodiment, on the basis of Fig. 5, the method for processing the vehicle key includes: receiving a second instruction sent by the vehicle, where the second instruction is sent by the vehicle after the vehicle determines that the gear of the vehicle is changed from a current first gear to a parking gear; or, the second instruction is sent by the vehicle after the vehicle determines that a position of the vehicle key is changed from inside the vehicle to outside the vehicle; and adjusting the vehicle key from the second mode to the first mode in response to the second instruction.

The connection interval between the vehicle key and the vehicle in the first mode is smaller than the connection interval between the vehicle key and the vehicle in the second mode.

Regarding the way in which the vehicle sends the second instruction to the vehicle key, reference can be made to the description in the above embodiment, which is not repeated in the present invention, for the sake of brevity.

For example, in some embodiments, the second instruction is sent by the vehicle after the vehicle determines that the gear of the vehicle is changed from the current first gear to the parking gear. The vehicle key may be adjusted from the second mode to the first mode in response to the second instruction. In this way, the response time can be shortened when the user uses the vehicle key to make the vehicle control operation.

That is, the first instruction can be sent to the vehicle key in case that the current first gear of the vehicle is different from the parking gear, so as to reduce the power consumption of the vehicle key. In addition, when the gear of the vehicle is changed from the first gear to the parking gear, the second instruction can be sent to the vehicle key, thus improving the response speed of the vehicle control operation. In this way, on the basis of ensuring the response speed of the vehicle control operation, the above solution also realizes the effect of saving electricity for the vehicle key.

In some embodiments, the second instruction is sent by the vehicle after the vehicle determines that the position of the vehicle key is changed from inside the vehicle to outside the vehicle. The vehicle key may be adjusted from the second mode to the first mode in response to the second instruction.

That is, the first instruction can be sent to the vehicle key in case the vehicle key is located in the vehicle, so as to reduce the power consumption of the vehicle key. In addition, when the position of the vehicle key is changed from inside the vehicle to outside the vehicle, the second instruction can be sent to the vehicle key, thus improving the response speed of the vehicle control operation. In this way, on the basis of ensuring the response speed of the vehicle control operation, the above solution also realizes the effect of saving electricity for the vehicle key.

In a possible embodiment, on the basis of Fig. 5, the method further includes: obtaining state information of the vehicle key, and controlling the vehicle key to perform a power saving operation according to the state information.

For example, in an embodiment, the state information includes a pairing state of the vehicle key and the vehicle. According to the state information, controlling the vehicle key to perform the power saving operation includes: turning off a broadcast signal of the vehicle key in case that the vehicle key is in an unpaired state.

In other words, the vehicle key can determine whether to send the broadcast signal according to its own pairing state. When the vehicle key is in the unpaired state, the broadcast signal can be turned off, thus saving power.

In a possible embodiment, the vehicle key may also be in a paired state. In this way, the vehicle key can also be controlled to perform the power saving operation according to other information of the vehicle key. For example, in some embodiments, the state information includes gravity sensor data of the vehicle key, and controlling the vehicle key to perform the power saving operation according to the state information includes: in case that the vehicle key is in the paired state and the vehicle key is determined to be in a static state according to the gravity sensor data, the time for which the vehicle key is in the static state is accumulated to obtain a target duration. When the target duration is larger than a target duration threshold, the vehicle key is controlled to enter a dormant state.

Here, the target duration threshold can be set based on requirements, and the embodiments of the present invention do not limit the value of the target duration threshold.

In the above solution, it can be first judged whether the vehicle key is in the paired state, and if the vehicle key is in the unpaired state, the vehicle key can be controlled to turn off the broadcast signal of the vehicle key, thus saving power. When the vehicle key is in the paired state, it can be determined whether the vehicle key is stationary according to the gravity sensor data, and the vehicle key can be controlled to enter the dormant state according to the duration for which the vehicle key is stationary.

In this way, the priority-based power saving control operation can be realized based on whether the vehicle key is in the paired state and whether the vehicle key is in the static state.

In addition, in some embodiments, the state information includes power information of the vehicle key, and controlling the vehicle key to perform the power saving operation according to the state information includes: in case that the power information indicates that a remaining power value of the vehicle key is lower than a power threshold, an interval for the vehicle key to send the broadcast signal is increased.

By increasing the interval of sending the broadcast signal when the remaining power value is low, the effect of saving the power of the vehicle key can be achieved.

In some embodiments, a priority-based power saving control strategy can also be set for the vehicle key. The priority from high to low can be, for example, judging whether the vehicle key is in the paired state, judging whether the vehicle key is in the static state, and judging whether the remaining power value of the vehicle key is lower than the power threshold.

For example, the state information may include the pairing state of the vehicle key and the vehicle, the gravity sensor data of the vehicle key, and the power information of the vehicle key. According to the state information, controlling the vehicle key to perform the power saving operation includes: turning off the broadcast signal of the vehicle key in case that the vehicle key is in the unpaired state; in case that the vehicle key is in the paired state and the vehicle key is determined to be in the static state according to the gravity sensor data, accumulating the time for which the vehicle key is in the static state to obtain the target time; controlling the vehicle key to enter the dormant state in case that the target duration is larger than the target duration threshold; in case that the vehicle key is in the paired state, it is determined that the vehicle key is not in the static state according to the gravity sensor data, and the power information indicates that the remaining power value of the vehicle key is lower than the power threshold, increasing the interval for the vehicle key to send the broadcast signal; in case that the vehicle key is in the paired state, it is determined that the vehicle key is in the static state according to the gravity sensor data, the target duration is less than or equal to the target duration threshold, and the power information indicates that the remaining power value of the vehicle key is lower than the power threshold, increasing the interval for the vehicle key to send the broadcast signal.

In this way, based on the set priority, the vehicle key can be controlled to perform corresponding power saving operations in different cases, thus saving the power consumption of the vehicle key.

After testing, the above solution can reduce the power consumption of the vehicle key from 116uA to 7uA when the vehicle key is not paired or is at rest. In addition, by increasing the broadcast interval when the power is low, the power consumption of the vehicle key can be reduced from 116uA to 87uA.

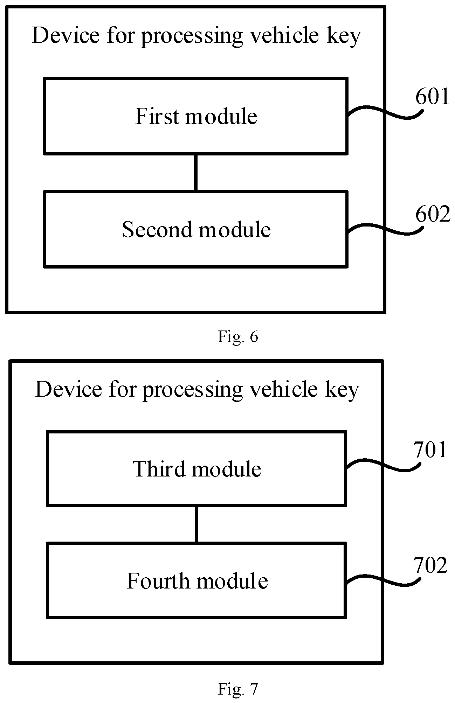

Based on the same inventive concept, the embodiments of the present invention provide a device for processing a vehicle key, which is applied to a vehicle. Fig. 6 is a block diagram of a device for processing a vehicle key according to an illustrative embodiment of the present invention. Referring to Fig. 6, the device for processing the vehicle key includes: a first module 601 configured to obtain gear information of the vehicle; and a second module 602 configured to send a first instruction to a vehicle key according to the gear information. The first instruction is configured to control the vehicle key to be adjusted from a current first mode to a second mode, and a power consumption of the vehicle key in the second mode is lower than a power consumption of the vehicle key in the first mode.

In the above solution, the vehicle can determine its own gear information and send the first instruction to the vehicle key according to the gear information. The first instruction is configured to control the vehicle key to be adjusted from the current first mode to the second mode, and the power consumption of the vehicle key in the second mode is lower than the power consumption of the vehicle key in the first mode. In this way, the vehicle can actively control the vehicle key according to its own gear information to reduce the power consumption of the vehicle key. Thus, it can save the power consumption of the vehicle key and increase the battery life of the vehicle key. With regard to the device in the above embodiment, the specific way in which each module performs operations has been described in detail in the embodiment of the method, and will not be described in detail here.

In some embodiments, the second module 602 includes: a first submodule configured to obtain a current gear of the vehicle as a first gear; and a second submodule configured to send the first instruction to the vehicle key in case that the first gear is different from a parking gear.

In some embodiments, the device for processing the vehicle key includes: a fifth module configured to send a second instruction to the vehicle key in response to that the gear of the vehicle changes from the first gear to the parking gear. The second instruction is configured to control the vehicle key to be adjusted from the second mode to the first mode. A connection interval between the vehicle key and the vehicle in the first mode is smaller than a connection interval between the vehicle key and the vehicle in the second mode.

In some embodiments, the second module 602 includes: a third submodule configured to acquire position information of the vehicle key in case that the current gear of the vehicle is the parking gear; a fourth submodule configured to determine whether the vehicle key is located in the vehicle according to the position information; and a fifth submodule configured to send the first instruction to the vehicle key in case that the vehicle key is located in the vehicle.

In some embodiments, the fifth sub-module includes: a first sub-unit configured to accumulate the time for which the vehicle key is located in the vehicle to obtain a first duration, in case that the vehicle key is located in the vehicle; a second subunit configured to send the first instruction to the vehicle key in case that the first duration is larger than a first duration threshold.

In some embodiments, the device for processing the vehicle key includes: a sixth module configured to send the second instruction to the vehicle key in response to that a position of the vehicle key is changed from inside the vehicle to outside the vehicle. The second instruction is configured to control the vehicle key to be adjusted from the second mode to the first mode.

The connection interval between the vehicle key and the vehicle in the first mode is smaller than the connection interval between the vehicle key and the vehicle in the second mode.

In some embodiments, the device for processing the vehicle key includes: a seventh module configured to acquire gravity sensor data of the vehicle key; an eighth module configured to accumulate the time for which the vehicle key is in a static state to obtain a second duration, in case that the vehicle key is determined to be in the static state according to the gravity sensor data; and a ninth module configured to break the connection between the vehicle and the vehicle key in case that the second duration is larger than a second duration threshold.

Based on the same inventive concept, the embodiments of the present invention provide a device for processing a vehicle key, which is applied to a vehicle key. Fig. 7 is a block diagram of a device for processing a vehicle key according to an illustrative embodiment of the present invention. Referring to Fig. 7, the device for processing the vehicle key includes: a third module 701 configured to receive a first instruction sent by the vehicle, and the vehicle sending the first instruction to the vehicle key according to gear information of the vehicle; and a fourth module 702 configured to adjust the vehicle key from a current first mode to a second mode in response to the first instruction, and a power consumption of the vehicle key in the second mode is lower than a power consumption of the vehicle key in the first mode.

In the above solution, the vehicle can determine its own gear information and send the first instruction to the vehicle key according to the gear information. The first instruction is configured to control the vehicle key to be adjusted from the current first mode to the second mode, and the power consumption of the vehicle key in the second mode is lower than the power consumption of the vehicle key in the first mode. In this way, the vehicle can actively control the vehicle key according to its own gear information to reduce the power consumption of the vehicle key. Thus, it can save the power consumption of the vehicle key and increase the battery life of the vehicle key. With regard to the device in the above embodiments, the specific way in which each module performs operations has been described in detail in the embodiments of the method, and will not be described in detail here.

In some embodiments, the device for processing the vehicle key includes: a tenth module configured to obtain state information of the vehicle key; and an eleventh module configured to control the vehicle key to perform a power saving operation according to the state information.

In some embodiments, the state information includes a pairing state of the vehicle key and the vehicle, and the eleventh module includes: a first sub-processing module configured to turn off a broadcast signal of the vehicle key in case that the vehicle key is in an unpaired state.

In some embodiments, the state information includes gravity sensor data of the vehicle key, and the eleventh module includes: a second sub-processing module configured to accumulate the time for which the vehicle key is in a static state to obtain a target duration, in case that the vehicle key is in a paired state and is determined to be in the static state according to the gravity sensor data; and a third sub-processing module configured to control the vehicle key to enter a dormant state in case that the target duration is larger than a target duration threshold.

In some embodiments, the state information includes battery power information of the vehicle key, and the eleventh module includes: a fourth sub-processing module configured to increase an interval for the vehicle key to send the broadcast signal, in case that the power information indicates that a remaining power value of the vehicle key is lower than a power threshold.

In some embodiments, the device for processing the vehicle key includes: a twelfth module configured to receive a second instruction sent by the vehicle. The second instruction is sent by the vehicle after the vehicle determines that a gear of the vehicle is changed from a current first gear to a parking gear; or, the second instruction is sent by the vehicle after the vehicle determines that a position of the vehicle key is changed from inside the vehicle to outside the vehicle; and a thirteenth module configured to adjust the vehicle key from the second mode to the first mode in response to the second instruction.

A connection interval between the vehicle key and the vehicle in the first mode is smaller than a connection interval between the vehicle key and the vehicle in the second mode.

The embodiments of the present invention provide a vehicle, including: a processor; and a memory for storing instructions executable by processor. The processor is configured to execute the instructions to execute the method for processing the vehicle key, applied to the vehicle, according to any embodiment of the present invention.

The embodiments of the present invention provide a vehicle key, including: a processor; and a memory for storing instructions executable the processor. The processor is configured to execute the instructions to execute the method for processing the vehicle key, applied to the vehicle key, according to any embodiment of the present invention.

The embodiments of the present invention provide a computer-readable storage medium, on which computer program instructions are stored, which are configured to, when executed by a processor, realize the steps of the method for processing the vehicle key, applied to the vehicle, according to any embodiment of the present invention.

The embodiments of the present invention provide a computer-readable storage medium, on which computer program instructions are stored, which are configured to, when executed by a processor, realize the steps of the method for processing the vehicle key, applied to the vehicle key, according to any embodiment of the present invention.

With regard to the device for processing the vehicle key in the above embodiments, the specific way in which each module performs operations has been described in detail in the embodiment of the methods for processing the vehicle key, and will not be described in detail here.

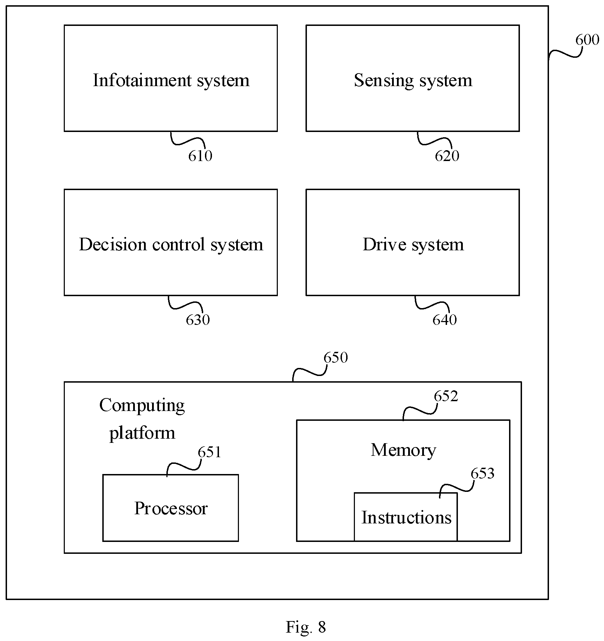

Fig. 8 is a block diagram of a vehicle 600 according to an illustrative embodiment. For example, the vehicle 600 may be a hybrid vehicle, a non-hybrid vehicle, an electric vehicle, a fuel cell vehicle or other types of vehicles. The vehicle 600 may be an autonomous vehicle, a semi-autonomous vehicle or a non-autonomous vehicle.

Referring to Fig. 8, the vehicle 600 may include various subsystems, such as an infotainment system 610, a sensing system 620, a decision control system 630, a drive system 640, and a computing platform 650. The vehicle 600 can also include more or less subsystems, and each subsystem can include a plurality of components. In addition, each subsystem and each component of the vehicle 600 can be interconnected in a wired or wireless manner.

In some embodiments, the infotainment system 610 may include a communication system, an entertainment system, a navigation system and the like.

The sensing system 620 may include several sensors for sensing information of the environment around the vehicle 600. For example, the sensing system 620 may include a global positioning system (the global positioning system may be a GPS system, a Beidou system or other positioning systems), an inertial measurement unit (IMU), a laser radar, a millimeter-wave radar, an ultrasonic radar and a camera.

The decision control system 630 may include a computing system, a vehicle controller, a steering system, an accelerator and a braking system.

The drive system 640 may include components that provide power movements for the vehicle 600. In an embodiment, the drive system 640 may include an engine, an energy source, a transmission system and wheels. The engine can be one or a combination of an internal combustion engine, an electric motor and an air compression engine. The engine can convert the energy provided by the energy source into the mechanical energy.

Some or all functions of the vehicle 600 are controlled by the computing platform 650. The computing platform 650 may include at least one processor 651 and a memory 652, and the processor 651 may execute instructions 653 stored in the memory 652.

The processor 651 may be any conventional processor, such as a commercially available CPU. The processor may also include, for example, a Graphic Process Unit (GPU), a Field Programmable Gate Array (FPGA), a System on Chip (SOC), an application specific integrated circuit (ASIC) or a combination thereof.

The memory 652 can be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

In addition to the instructions 653, the memory 652 can also store data, such as a road map, route information, a position, a direction, a speed of the vehicle and other data. The data stored in the memory 652 can be used by the computing platform 650.

In the embodiments of the present invention, the processor 651 can execute the instructions 653 to complete all or part of the steps of the above method for processing the vehicle key, applied to the vehicle.

In another illustrative embodiment, a computer program product is also provided, which includes a computer program configured to be executed by a programmable device, and the computer program has a code portion for executing the above method for processing the vehicle key, applied to the vehicle, when executed by the programmable device.

In another illustrative embodiment, a computer program product is also provided, which includes a computer program configured to be executed by a programmable device, and the computer program has a code portion for executing the above method for processing the vehicle key, applied to the vehicle key, when executed by the programmable device.

Other embodiments of the present invention will easily occur to those skilled in the art after considering the specification and practicing the present invention. This application is intended to cover any variations, uses or adaptations of the present invention, which follow the general principles of the present invention and include the common sense or common technical means in the field that are not disclosed in the present invention.

## Claims

1. A method for processing a vehicle key, comprising:
obtaining (S21, S41) gear information of the vehicle; and
sending (S22, S42) a first instruction to the vehicle key according to the gear information, wherein the first instruction is configured to control the vehicle key to be adjusted from a current first mode to a second mode, and a power consumption of the vehicle key in the second mode is lower than a power consumption of the vehicle key in the first mode.

2. The method according to claim 1, wherein sending (S22, S42) the first instruction to the vehicle key according to the gear information comprises:
obtaining a current gear of the vehicle as a first gear; and
sending the first instruction to the vehicle key in case that the first gear is different from a parking gear.

3. The method according to claim 2, comprising:
sending a second instruction to the vehicle key in response to that the gear of the vehicle changes from the first gear to the parking gear, wherein the second instruction is configured to control the vehicle key to be adjusted from the second mode to the first mode,
wherein a connection interval between the vehicle key and the vehicle in the first mode is smaller than a connection interval between the vehicle key and the vehicle in the second mode.

4. The method according to any one of claims 1-3, wherein sending (S22) the first instruction to the vehicle key according to the gear information comprises:
obtaining (S31) position information of the vehicle key in case that a current gear of the vehicle is a parking gear;
determining (S32) whether the vehicle key is located in the vehicle according to the position information; and
sending (S33) the first instruction to the vehicle key in case that the vehicle key is located in the vehicle.

5. The method according to claim 4, wherein sending (S33) the first instruction to the vehicle key in case that the vehicle key is located in the vehicle comprises:
in case that the vehicle key is located in the vehicle, obtaining a first duration by accumulating a time for which the vehicle key is located in the vehicle; and
in case that the first duration is larger than a first duration threshold, sending the first instruction to the vehicle key.

6. The method according to claim 4 or 5, comprising:
sending a second instruction to the vehicle key in response to that a position of the vehicle key is changed from inside the vehicle to outside the vehicle, wherein the second instruction is configured to control the vehicle key to be adjusted from the second mode to the first mode,
wherein a connection interval between the vehicle key and the vehicle in the first mode is smaller than a connection interval between the vehicle key and the vehicle in the second mode.

7. The method according to any one of claims 1-6, comprising:
obtaining (S43) gravity sensor data of the vehicle key;
obtaining (S44) a second duration by accumulating a time for which the vehicle key is in a static state, in case that the vehicle key is determined to be in the static state according to the gravity sensor data; and
breaking (S45) the connection between the vehicle and the vehicle key in case that the second duration is larger than a second duration threshold.

8. A method for processing a vehicle key, comprising:
receiving (S51) a first instruction sent by a vehicle, wherein the vehicle sends the first instruction to the vehicle key according to gear information of the vehicle; and
in response to the first instruction, adjusting (S52) the vehicle key from a current first mode to a second mode, wherein a power consumption of the vehicle key in the second mode is lower than a power consumption of the vehicle key in the first mode.

9. The method according to claim 8, comprising:
obtaining state information of the vehicle key; and
according to the state information, controlling the vehicle key to perform a power saving operation.

10. The method according to claim 9, wherein the state information comprises a pairing state of the vehicle key and the vehicle, and controlling the vehicle key to perform the power saving operation according to the state information comprises:
turning off a broadcast signal of the vehicle key in case that the vehicle key is in an unpaired state.

11. The method according to claim 9 or 10, wherein the state information comprises gravity sensor data of the vehicle key, and controlling the vehicle key to perform the power saving operation according to the state information comprises:
in case that the vehicle key is in a paired state and the vehicle key is determined to be in a static state according to the gravity sensor data, obtaining a target duration by accumulating a time for which the vehicle key in the static state; and
in case that the target duration is larger than a target duration threshold, controlling the vehicle key to enter a dormant state.

12. The method according to any one of claims 9-11, wherein the state information includes power information of the vehicle key, and controlling the vehicle key to perform the power saving operation according to the state information comprises:
in case that the power information indicates that a remaining power value of the vehicle key is lower than a power threshold, increasing an interval for the vehicle key to send a broadcast signal.

13. The method according to any one of claims 8-12, comprising:
receiving a second instruction sent by a vehicle, wherein the second instruction is sent by the vehicle after the vehicle determines that a gear of the vehicle is changed from a current first gear to a parking gear; or, the second instruction is sent by the vehicle after the vehicle determines that a position of the vehicle key is changed from inside the vehicle to outside the vehicle; and
adjusting the vehicle key from the second mode to the first mode in response to the second instruction,
wherein a connection interval between the vehicle key and the vehicle in the first mode is smaller than a connection interval between the vehicle key and the vehicle in the second mode.

14. A vehicle (600), comprising:
a processor (651); and
a memory (652) for storing instructions (653) executable by the processor (651),
wherein the processor (651) is configured to execute the instructions to perform a method according to any one of claims 1-13.

15. A non-transitory computer-readable storage medium, on which computer program instructions are stored, which are configured to, when executed by a processor (651), realize a method according to any one of claims 1-13.
